Europäisches Patentamt

European Patent Office

Office européen des brevets

(11) Veröffentlichungsnummer: **0 251 124**
**A2**

(12) **EUROPÄISCHE PATENTANMELDUNG**

(21) Anmeldenummer: 87108956.1

(22) Anmeldetag: 23.06.87

(51) Int. Cl.⁴: **A47J 31/44** , A47J 43/12

(30) Priorität: 24.06.86 YU 1101/86

(43) Veröffentlichungstag der Anmeldung:
07.01.88 Patentblatt 88/01

(84) Benannte Vertragsstaaten:
AT BE CH DE ES FR GB GR IT LI LU NL SE

(71) Anmelder: Vuljanic, Ivan
Danijela Grcica 21
Y-47000 Karlovac(YU)

(72) Erfinder: Vuljanic, Ivan
Danijela Grcica 21
YU-47000 Karlovac(YU)
Erfinder: Bricelj, Boris
Mirka Seljana 1
YU-47000 Karlovac(YU)

(74) Vertreter: Bauer, Robert, Dipl.-Ing. et al
Boeters, Bauer & Partner Patentanwälte
Thomas-Wimmer-Ring 14
D-8000 München 22(DE)

(54) Gerät zur Herstellung von Cappuccino.

(57) Bei einem Gerät zur Herstellung von Cappuccino, bei dem die betreffende Milch in einem Gefäß - (1, 2) durch Einleiten von Dampf erwärmt und zum Schäumen gebracht wird, weist dieses Gefäß ein Überlaufrohr (6) für das Austreiben der Milch durch den eingeleiteten Dampf auf. Vorzugsweise ist das Gefäß teilbar und des weiteren neben einem Dampfeinleitungsrohr (3) mit einem Einfüllrohr (4) für die Milch versehen.

Durch das Überlaufrohr (6) wird jedesmal die gesamte in dem Gefäß (1, 2) vorhandene Milchmenge mittels des Dampfes ausgetrieben.

EP 0 251 124 A2

## Gerät zur Herstellung von Cappuccino

Die Erfindung betrifft ein Gerät zur Herstellung von Cappuccino gemäß Gattungsbegriff des Patentanspruchs 1.

Ein derartiges Gerät ist bisher lediglich in der Form bekannt, daß Milch in einem Gefäß durch Dampf aus dem Gerät für die Herstellung des zugehörigen Espresso-Kaffees erwärmt wird, wobei der dabei entstehende Milchschaum dem Espresso-Kaffee manuell hinzugefügt werden muß. Indessen wird die betreffende Milch bei mehrmaligem Erwärmen durch den kondensierten Dampf wässerig und somit minderwertig, so daß die restliche Milch schließlich weggeschüttet werden muß. Sodann ist die manuelle Hinzufügung der Milch umständlich und eine gleichbleibende Qualität auch von daher nicht zu erwarten.

Der beanspruchten Erfindung liegt nun die Aufgabe zugrunde, hier Abhilfe zu schaffen und im besonderen bei einschlägigen Geräten das Erwärmen der Milch mittels Dampf und ihre Zugabe in Form von Schaum in einer Weise zu lösen, die bei rationeller Arbeitsweise und Vermeidung einer Milchvergeudung ein Cappuccino-Getränk von gleichmäßiger, hoher Qualität entstehen läßt.

Unter Anwendung des erfindungsgemäßen Geräts hat die Bedienungsperson lediglich eine gewünschte Milchmenge in das Gefäß einzufüllen und sodann den Dampfzutritt freizugeben. Der Dampf erwärmt die Milch und verwandelt sie in Schaum, der durch das Überlaufrohr ohne Hinzutun in die Tasse fließt. Dabei wird jedesmal die gesamte Milchmenge aus dem Gefäß ausgetrieben, so daß das Gefäß nach jedem Gebrauch leer ist.

Die Qualität des so erhaltenen Getränks ist somit gleichmäßig hoch und auch nicht von der Geschicklichkeit der Bedienungsperson abhängig. Die verwendete Milch wird vollständig ausgenutzt, da sich ein Weggießen von Milchresten erübrigt.

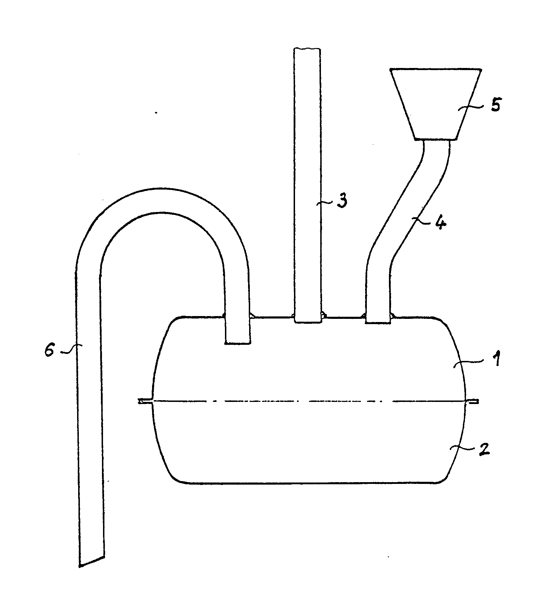

Nachfolgend wird ein bevorzugtes Ausführungsbeispiel anhand der Zeichnung genauer beschrieben. Die einzige Figur der Zeichnung zeigt einen Schnitt durch das betreffende Gefäß samt anschließenden Teilen.

Das Gefäß ist langgestreckt und besteht aus einem Oberteil 1 sowie einem Unterteil 2, die beide in irgendeiner konventionellen Weise dicht, jedoch zu Reinigungszwecken voneinander trennbar, miteinander verbunden sind. In der Mitte des Oberteils 1 mündet ein Dampfeinleitungsrohr 3 zur Einleitung des erforderlichen Dampfes aus dem Espresso-Gerät oder einer sonstigen Dampfquelle. Auf der einen Seite des Dampfeinleitungsrohres 3, gesehen in Richtung der Längsachse des Gefäßes 1, 2, mündet gleichfalls in den Oberteil 1 des Gefäßes ein Einfüllrohr 4 für die Milch, das an seinem oberen Ende mit einem Trichter 5 versehen ist.

Auf der entgegengesetzten Seite des Dampfeinleitungsrohres 3, gesehen in Richtung der Längsachse des Gefäßes, geht von dem Oberteil 1, zunächst nach oben verlaufend, ein gebogenes Überlaufrohr 6 aus, das an einer Stelle unterhalb des Gefäßes 1, 2 endet. Bezüglich weiterer Einzelheiten wird auf die Zeichnung und die Ansprüche verwiesen.

Beim Gebrauch des Geräts wird nun zunächst die jeweils gewünschte Milchmenge (beispielsweise 30 - 50 ccm) durch den Trichter 5 in das Gefäß 1, 2 eingefüllt. Sodann wird ein in dem Dampfeinleitungsrohr 3 vorgesehenes Dampfabsperrventil geöffnet, worauf der in das Gefäß eintretende Dampf die Milch erwärmt, in Schaum verwandelt und durch das Überlaufrohr 6 in die bereitstehende Tasse austreibt. Wie gesagt, wird durch den Dampf jeweils die gesamte Milchmenge ausgetrieben. Unabhängig davon kann das Gefäß 1, 2 von Zeit zu Zeit zu Reinigungszwecken geöffnet werden.

## Ansprüche

1. Gerät zur Herstellung von Cappuccino, bei dem die betreffende Milch in einem Gefäß (1, 2) durch Einleiten von Dampf erwärmt und zum Schäumen gebracht wird, dadurch **gekennzeichnet,** daß das Gefäß (1, 2) ein Überlaufrohr (6) für das Austreiben der Milch durch den eingeleiteten Dampf aufweist.

2. Gerät nach Anspruch 1, dadurch **gekennzeichnet,** daß das Überlaufrohr (6) unterhalb der tiefsten Stelle des Gefäßes (1, 2) endet.

3. Gerät nach Anspruch 1 oder 2, dadurch **gekennzeichnet,** daß das Gefäß (1, 2) des weiteren ein Einfüllrohr (4) für die Milch aufweist.

4. Gerät nach Anspruch 3, dadurch **gekennzeichnet,** daß das Einfüllrohr (4) an seinem oberen Ende einen Trichter (5) trägt.

5. Gerät nach Anspruch 4, dadurch **gekennzeichnet,** daß der Trichter (5) oberhalb der höchsten Stelle des Überlaufrohres (6) angeordnet ist.

6. Gerät nach einem der Ansprüche 3 bis 5, dadurch **gekennzeichnet,** daß das Gefäß (1, 2) in Horizontalrichtung langgestreckt ist und daß das Überlaufrohr (6) und das Einfüllrohr (4) im Bereich der beiden entgegengesetzten Enden des Gefäßes angeordnet sind.

7. Gerät nach Anspruch 6, dadurch **gekennzeichnet,** daß ein Dampfeinleitungsrohr (3) an einer Stelle zwischen dem Überlaufrohr (6) und dem Einfüllrohr (4) in das Gefäß (1, 2) mündet.

8. Gerät nach Anspruch 7, dadurch **gekennzeichnet,** daß das Dampfeinleitungsrohr (3) ein Dampfabsperrventil enthält.

9. Gerät nach Anspruch 7 oder 8, dadurch **gekennzeichnet,** daß sämtliche Rohre (3, 4, 6) von oben her in das Gefäß (1, 2) eintreten.

10. Gerät nach einem der Ansprüche 7 bis 9, dadurch **gekennzeichnet,** daß das Überlaufrohr (6) in dem Gefäß (1, 2) etwas tiefer als das Dampfeinleitungsrohr (3) und das Einfüllrohr (4) im oberen Bereich des Gefäßes (1, 2) endet.

11. Gerät nach einem der vorhergehenden Ansprüche, dadurch **gekennzeichnet,** daß das Gefäß (1, 2) zu Reinigungszwecken teilbar ist.